# EUROPÄISCHE PATENTANMELDUNG

(11) **EP 3 904 012 A1**
(43) Veröffentlichungstag der Anmeldung: **03.11.2021**
(21) Anmeldenummer: 20171710.5
(22) Anmeldetag: 28.04.2020
(51) Int. Cl.: B25F 5/02

(54) **VORRICHTUNG ZUM ERFASSEN EINES KRITISCHEN STURZES**

(71) Anmelder: Hilti Aktiengesellschaft, 9494 Schaan (LI)
(72) Erfinder: Goyal, Varnim, 86916 Kaufering (DE); Müller, Simon, 86399 Bobingen (DE); Ziegler, Bernd, 86830 Schabmünchen (DE)
(74) Vertreter: Hilti Aktiengesellschaft Corporate Intellectual Property

(57) **Zusammenfassung**

Vorrichtung (6) zum Erfassen eines kritischen Sturzes eines Akkumulators (1) und ein Akkumulator (1) mit einer Vorrichtung (6) zum Erfassen eines kritischen Sturzes, wobei der Akkumulator (1) eine Steuerungseinrichtung (5) mit einer Entladeeinrichtung (4) sowie wenigstens eine Energiespeichereinrichtung (3) enthält.

Die Vorrichtung (6) enthält wenigstens einen Sensor (8) zum Erfassen eines Beschleunigungswerts in einer vorbestimmten Richtung, eine Steuerungselektronik (9), welche ausgestaltet ist mindestens eine Funktion des Akkumulators (1) zu steuern sowie ein Befestigungselement (10) für den wenigstens einen Sensor (8), wodurch der wenigstens eine Sensor (8) um einen Drehpunkt (DP) relativ zum Akkumulator (1) schwenkbar gelagert ist und im Wesentlichen in einer vorbestimmten Raumlage zum Akkumulator (1) gehalten wird, wenn der Akkumulator um wenigstens eine Drehachse (x, y, z) rotiert.

## Beschreibung

Die vorliegende Erfindung betrifft eine Vorrichtung zum Erfassen eines kritischen Sturzes eines Akkumulators.

Darüber hinaus betrifft die vorliegende Erfindung einen Akkumulator mit einer Vorrichtung zum Erfassen eines kritischen Sturzes, wobei der Akkumulator eine Steuerungseinrichtung mit einer Entladeeinrichtung sowie wenigstens eine Energiespeichereinrichtung enthält.

Moderne Werkzeugmaschinen, wie beispielsweise Bohrhämmer, Sägen, Schleifgeräte oder dergleichen, sowie Akkumulatoren, die als Energieversorgung mit den Werkzeugmaschinen verbunden werden können, sind üblicherweise sehr robust gestaltet und weisen kaum Beschädigungen nach einem Sturz oder Misshandlung auf.

Nach einem tiefen Sturz aus einer besonders hohen Höhe auf einen harten bzw. nicht elastischen Boden können jedoch durchaus Beschädigungen an der Werkzeugmaschine und/oder einem Akkumulator entstehen. Diese Beschädigungen sind ggf. für einen Anwender der Werkzeugmaschine und/oder des Akkumulators nicht direkt sichtbar oder bemerkbar. Eine von einem Anwender nicht sichtbare oder nicht merkbare Beschädigung an der Werkzeugmaschine und/oder des Akkumulators kann jedoch ein Problem darstellen, da die Funktionalität bzw. Funktionsweise der Werkzeugmaschine und/oder des Akkumulators möglicherweise nicht mehr gegeben ist. Für den Anwender ist es jedoch nicht immer einwandfrei feststellbar, ob ein Sturz bzw. ein Herunterfallen einer der Werkzeugmaschine und/oder des Akkumulators eine Beschädigung verursacht hat und ob die weitere Benutzung der Werkzeugmaschine und/oder des Akkumulators nach wie vor ausreichend sicher ist.

Auf dem Markt erhältliche bzw. aus dem Stand der Technik bereits bekannte Vorrichtungen zum Erfassen eines kritischen Sturzes verwenden oftmals Beschleunigungssensoren zum Messen von Beschleunigungswerten, die als Indikator eines Sturzes des Akkumulators dienen. Je nach gemessenen Beschleunigungswert kann ein Sturz des Akkumulators als kritisch oder unkritisch bewertet werden.

Probleme bestehen jedoch bei Vorrichtungen mit mehreren Beschleunigungssensoren bzw. mehreren Sensoren, die Beschleunigungen in unterschiedlichen Richtungen messen, da die Menge an gemessenen und zu verarbeitenden Beschleunigungswerten oftmals keine eindeutigen Messergebnisse mit verlässlichen Aussagen über die Kritikalität eines Sturzes eines Akkumulators zu lassen.

Aufgabe der vorliegenden Erfindung ist es daher, eine Vorrichtung zum Erfassen eines kritischen Sturzes eines Akkumulators sowie einen Akkumulator mit einer Vorrichtung zum Erfassen eines kritischen Sturzes bereitzustellen, mit dem das vorstehend genannte Problem gelöst und ein kritischer Sturz bzw. ein Herunterfallen eindeutig erfasst werden kann.

Die Aufgabe wird jeweils gelöst durch den Gegenstand des unabhängigen Anspruchs 1 und 3. Weitere vorteilhafte Ausgestaltungsformen der Erfindung finden sich in den entsprechenden Unteransprüchen.

Die Aufgabe wird insbesondere gelöst durch eine Vorrichtung zum Erfassen eines kritischen Sturzes eines Akkumulators.

Erfindungsgemäß enthält die Vorrichtung wenigstens einen Sensor zum Erfassen eines Beschleunigungswerts in einer vorbestimmten Richtung, eine Steuerungselektronik, welche ausgestaltet ist mindestens eine Funktion des Akkumulators zu steuern sowie ein Befestigungselement für den wenigstens einen Sensor, wodurch der wenigstens eine Sensor um einen Drehpunkt relativ zum Akkumulator schwenkbar gelagert ist und im Wesentlichen in einer vorbestimmten Raumlage zum Akkumulator gehalten wird, wenn der Akkumulator um wenigstens eine Drehachse rotiert. Hierdurch kann sichergestellt werden, dass der Sensor stets Beschleunigungswerte in einer einzigen Richtung erfasst. Die Menge an erfassten Daten und Werten kann damit reduziert und eine Evaluierung der Kritikalität eines Sturzes erleichtert werden.

Ein Sturz aus einer kritischen (d.h. großen) Höhe führt zu einem plötzlichen und relativ starken Abbremsen des fallenden Objekts am Untergrund, auf den die Vorrichtung aufschlägt. Dieses Abbremsen am Untergrund entspricht einer starken Beschleunigung der fallenden Vorrichtung. Je tiefer der Sturz, desto größer die Beschleunigung der Vorrichtung.

Gemäß einer vorteilhaften Ausführungsform der vorliegenden Erfindung kann es möglich sein, dass die Steuerungselektronik ausgestaltet ist beim Erfassen eines vorbestimmten Beschleunigungsschwellwerts durch den wenigstens einen Sensor wenigstens ein Signal an die Steuerungselektronik zu senden. Mit dem gesendeten Signal kann erreicht werden, dass der Akkumulator gesperrt wird und keine elektrische Energie mehr abgegeben werden kann. Des Weiteren kann das gesendete Signal dazu führen, dass kein erneutes Laden des Akkumulators mit elektrischer Energie mehr möglich ist. Hierzu gelangt das von der Steuerungselektronik gesendet Signal zu einer Steuerungseinrichtung des Akkumulators.

Darüber hinaus wird die Aufgabe gelöst durch einen Akkumulator mit einer Vorrichtung zum Erfassen eines kritischen Sturzes, wobei der Akkumulator eine Steuerungseinrichtung mit einer Entladeeinrichtung sowie wenigstens eine Energiespeichereinrichtung enthält.

Erfindungsgemäß ist vorgesehen, dass die Vorrichtung zum Erfassen eines kritischen Sturzes wenigstens einen Sensor zum Erfassen eines Beschleunigungswerts in einer vorbestimmten Richtung, eine Steuerungselektronik, welche ausgestaltet ist mindestens eine Funktion des Akkumulators zu steuern sowie ein Befestigungselement für den wenigstens einen Sensor enthält, wobei das Befestigungselement so ausgestaltet ist, dass der wenigstens eine Sensor um einen Drehpunkt relativ zum Akkumulator schwenkbar gelagert ist und im Wesentlichen in einer vorbestimmten Raumlage zum Akkumulator gehalten wird, wenn der Akkumulator um wenigstens eine Drehachse rotiert.

Bei dem Sensor kann es sich um einen Beschleunigungssensor, Gyro-Sensor oder dergleichen handeln, mit dem eine Beschleunigung bzw. Beschleunigungswerte erfasst werden können. Der Sensor kann dabei so ausgestaltet sein, dass lediglich Beschleunigungswerte in einer einzigen Richtung erfasst werden. Es ist jedoch auch möglich, dass der Sensor ausgestaltet ist, um Beschleunigungswerte in drei orthogonal aufeinander stehenden Richtungsachsen zu erfassen.

Gemäß einer vorteilhaften Ausführungsform der vorliegenden Erfindung kann es möglich sein, dass die wenigstens eine Energiespeichereinrichtung durch die Entladeeinrichtung wenigstens teilweise entladen wird, wenn ein vorbestimmter Beschleunigungsschwellwert durch den wenigstens einen Sensor erfasst wird. Hierdurch kann die Sicherheit in der Handhabung eines möglicherweise beschädigten Akkumulators aufgrund eines kritischen Sturzes erhöht werden.

Die Entladevorrichtung kann durch wenigstens einen Kondensator, wenigstens einen Transistor und/oder wenigstens einen elektrischen Widerstand ausgestaltet sein.

Entsprechend einer weiteren vorteilhaften Ausführungsform der vorliegenden Erfindung kann es möglich sein, dass die Steuerungselektronik und/oder Steuerungseinrichtung ausgestaltet ist, dass ein Laden der wenigstens einen Energiespeichereinrichtung mit elektrischer Energie verhindert wird, wenn ein vorbestimmter Beschleunigungsschwellwert durch den wenigstens einen Sensor erfasst wird. Hierdurch kann ein potentielles Risiko durch das Laden eines möglicherweise beschädigten Akkumulators mit elektrischer Energie verhindert werden.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:
- Figur 1: eine perspektivische Ansicht auf einen Akkumulator mit einer Vorrichtung zum Erfassen eines kritischen Sturzes eines Akkumulators;
- Figur 2: eine perspektivische Ansicht auf die Vorrichtung zum Erfassen eines kritischen Sturzes eines Akkumulators in einer ersten Raumlage bzw. Ausrichtung verbunden mit einer Steuerungseinrichtung des Akkumulators;
- Figur 3: eine perspektivische Ansicht auf die Vorrichtung zum Erfassen eines kritischen Sturzes eines Akkumulators in einer zweiten Raumlage bzw. Ausrichtung verbunden mit der Steuerungseinrichtung des Akkumulators; und
- Figur 4: die Detailansicht auf einen Sensor mit einer Befestigungselement für den Sensor.

### Ausführungsbeispiele:

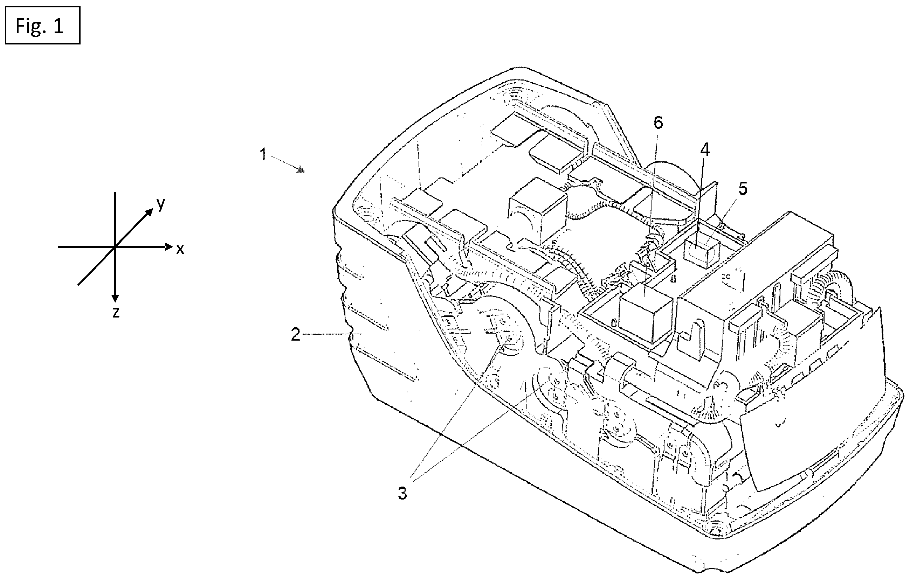

In Figur 1 ist ein Akkumulator 1 dargestellt. Der Akkumulator 1 kann beispielsweise mit einer Werkzeugmaschine wiederlösbar verbunden werden, um die Werkzeugmaschine mit elektrischer Energie zu versorgen. Die Werkzeugmaschine ist in den Figuren nicht dargestellt. Bei der Werkzeugmaschine kann es sich um eine Bohrmaschine, eine Säge, ein Schleifgerät oder dergleichen sein.

Der Akkumulator 1 enthält dabei im Wesentlichen ein Gehäuse 2, eine Anzahl an Energiespeicherzellen 3, eine Entladeeinrichtung 4 sowie eine Steuerungseinrichtung 5. Die Energiespeicherzellen 3 dienen zum Aufnahmen, Speichern und Angeben von elektrischer Energie bzw. elektrischer Spannung. Die Entladeeinrichtung 4 ist in Form eines leistungsstarken Kondensators ausgestaltet und dient zum kontrollierten Entladen der Energiespeicherzellen 3, d.h. das Entfernen der elektrischen Energie aus den Energiespeicherzellen 3. Die Steuerungseinrichtung 5 dient zum Steuern und Regeln verschiedener Funktionen der einzelnen Komponenten des Akkumulators 1 bzw. des gesamten Akkumulators 1.

Die Energiespeicherzellen 3 können auch als Akku-Zellen bezeichnet werden und basieren auf einer Lithium-Ionen-Technologie.

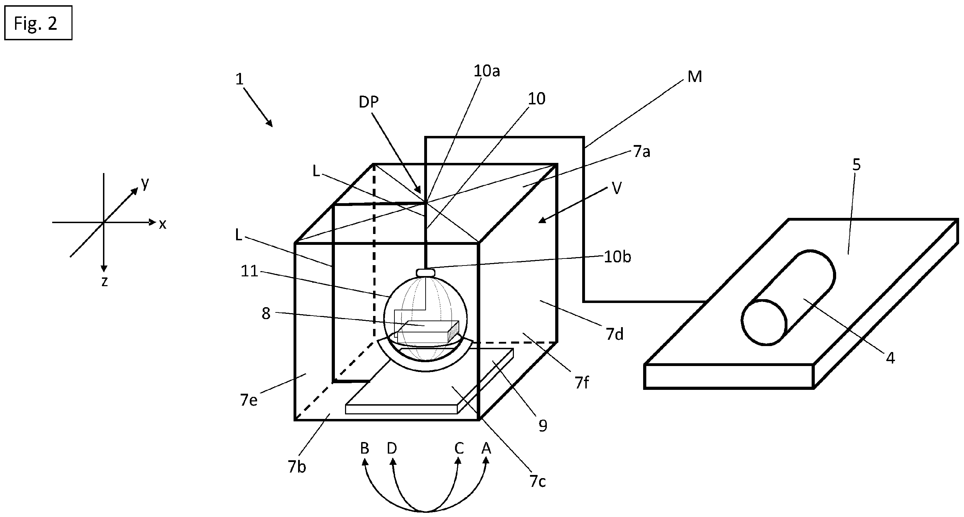

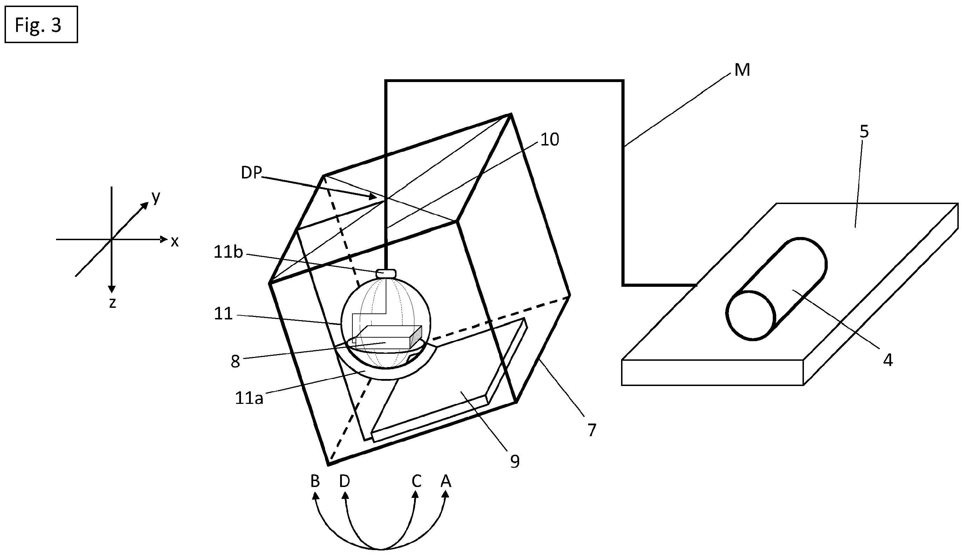

Darüber hinaus enthält der Akkumulator 1 eine Vorrichtung 6 zum Erfassen eines kritischen Sturzes. Wie in Figur 2 und 3 angedeutet ist die Vorrichtung 6 zum Erfassen eines kritischen Sturzes mit der Steuerungseinrichtung 5 des Akkumulators 1 verbunden. Die Steuerungseinrichtung 5 ist so mit den Energiespeicherzellen 3 verbunden, dass elektrische Energie von den Energiespeicherzellen 3 zu der Steuerungseinrichtung 5 gelangen kann. Durch die Verbindung mit der Steuerungseinrichtung 5 wird die Vorrichtung 6 mit elektrischer Spannung bzw. elektrische Energie aus den Energiespeicherzellen 3 versorgt. Darüber hinaus können Daten und Informationen in Form von Signalen zwischen der Vorrichtung 6 und der Steuerungseinrichtung 5 des Akkumulators 1 ausgetauscht werden.

In Figur 2 ist die Vorrichtung 6 zum Erfassen eines kritischen Sturzes in einem beispielhaften Ausführungsbeispiel dargestellt.

Die Vorrichtung 6 enthält dabei im Wesentlichen einen Rahmen 7, einen Sensor 8, Steuerungselektronik 9, eine Befestigungselement 10 und eine Trägereinrichtung 11.

Der Rahmen 7 weist im Wesentlichen eine Oberseite 7a, eine Unterseite 7b, eine Vorderseite 7c, eine Rückseite 7d, eine linke Seitenwand 7e und eine rechte Seitenwand 7f. Der Rahmen 7 bildet dadurch einen Innenraum bzw. ein Innenvolumen V.

Das Befestigungselement 10 ist in Form eines Stabes mit einem ersten Ende 10a und einem zweiten Ende 10b ausgebildet.

Der Sensor 8 ist in Form eines Beschleunigungssensors ausgestaltet. Der Beschleunigungssensor ist ausgestaltet, um Beschleunigungen in Form von Beschleunigungswerten in Richtung z zu erfassen.

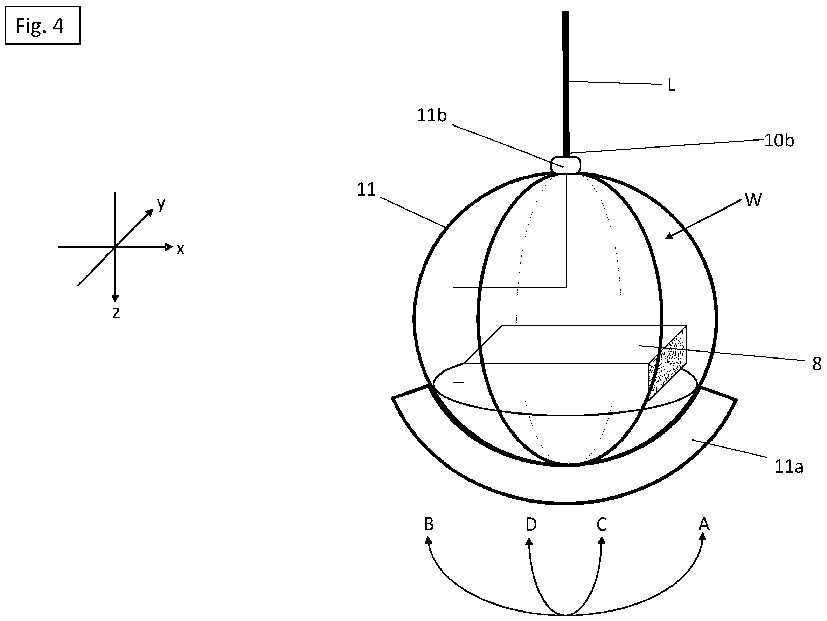

Die Trägereinrichtung 11 ist in Form einer hohlen Kugel mit einem Innenraum bzw. ein Innenvolumen W ausgestaltet. Wie in Figur 4 gezeigt, ist der Sensor 8 fest im Innenraum W der als Kugel ausgestalteten Trägereinrichtung 11 befestigt. Wie ebenfalls in Figur 4 ersichtlich ist an einer Unterseite der als Kugel ausgestalteten Trägereinrichtung 11 eine Gewichtselement 11a befestigt. Das zusätzliche Gewichtselement 11a dient dazu, die Trägheit der Trägereinrichtung 11 zu erhöhen. Zusätzlich ist zwischen dem zweiten Ende 10b des Befestigungselements 10 und der Trägereinrichtung 11 ein elastisches Kupplungselement 11b positioniert. Das Kupplungselement 11b dient zum Ausgleich von Relativbewegungen zwischen dem zweiten Ende 10b des Befestigungselements 10 und der Trägereinrichtung 11.

Die Steuerungselektronik 9 ist in Form einer flachen Leiterplatte ausgestaltet und an der Unterseite 7b im Innenraum V des Rahmens 7 befestigt. Die Steuerungselektronik 9 dient unter anderem dazu die von dem Sensor erfassten Beschleunigungswerte zu speichern, zu verarbeiten sowie aus den Beschleunigungswerte abgeleitete Signale und anderen Daten auszusenden. Wie ebenfalls in Figur 2, 3 und 4 ersichtlich führt eine Leitung L von dem Sensor 8 zu der Steuerungselektronik 9, wodurch die von dem Sensor 8 erfassten Beschleunigungswerte an die Steuerungselektronik 9 gesendet werden. Dadurch, dass die Steuerungselektronik 9 und die Steuerungseinrichtung 5 des Akkumulators 1 miteinander über Leitungen M verbunden sind, können ebenfalls Daten und Informationen zwischen der Steuerungselektronik 9 und der Steuerungseinrichtung 5 ausgetauscht werden.

Das Befestigungselement 10 ist im Inneren des Rahmens 7 bzw. innerhalb des Innenvolumens V des Rahmens 7 mit dem ersten Ende 10a an der Oberseite 7a des Rahmens 7 befestigt. An dem zweiten bzw. freien Ende 10b des Befestigungselements 10 ist die als Kugel ausgestaltete Trägereinrichtung 11 befestigt. Das erste Ende 10a des Befestigungselements 10 ist so mit der Oberseite 7a des Rahmens 7 beweglich befestigt, dass die Trägereinrichtung 11 mit Hilfe des Befestigungselements 10 als Pendel frei in dem Innenvolumen V des Rahmens 7 schwingen kann. Das erste Ende 10a des Befestigungselements 10 dient damit als Drehpunkt DP für Sensor 8. Die Ausmaße bzw. Seitenlängen des Rahmens 7 sowie die Länge des Befestigungselements 10 sind so gewählt, dass bei einer Rotation des Rahmens 7 in die Drehrichtung A, B, C oder D die als Kugel ausgestaltete Trägereinrichtung 11 nicht bis an eine Seitenwand des Rahmens 7 reicht. Wie vorstehend beschrieben ist der Sensor 8 in der Trägereinrichtung 11 so durch das Befestigungselement 10 als Pendel frei schwingend in dem Rahmen 7 angebracht, dass eine Rotieren bzw. Schwenken des Rahmens 7 um in die Drehrichtung A, B, C oder D nicht zu einer Veränderung der Raumlage des Sensors 8 führt. Wie in Figur 3 dargestellt, bleibt die Raumlage bzw. Ausrichtung des Sensors 8 stationär, auch wenn sich der Akkumulator bzw. der Rahmen 7 dreht. Hierdurch ist es für den Sensor 8 möglich stets Beschleunigungswerte in ein und derselben Richtung z zu erfassen.

In dem Falle, dass der Akkumulator 1 stürzt und sich im freien Fall um eine oder mehrere seiner drei Achsen x, y oder z dreht, bleibt der als Pendel aufgehängte Sensor 8 im Inneren der der Vorrichtung 6 gleichbleibend ausgerichtet und erfasst stets die Beschleunigungswerte in Richtung z.

Aufgrund der von dem Sensor 8 erfassten Beschleunigungswerte in Richtung z kann mit Hilfe der Steuerungselektronik 9 bewertet werden, ob wegen des Sturzes ein vorbestimmter Schwellwert für die Beschleunigung erreicht wurde. In einem Speicher der Steuerungselektronik 9 sind hierzu Schwellwerte für die Beschleunigung gespeichert. Der Speicher der Steuerungselektronik 9 ist in den Figuren nicht gezeigt.

Wenn ein Schwellwert für die Beschleunigung in Richtung z aufgrund eines Sturzes des Akkumulators 1 erreicht wurde, kann angenommen werden, dass es sich aufgrund der relativ hohen Beschleunigung beim Aufprall des Akkumulators 1 auf den Boden um einen kritischen Sturz gehandelt hat. Bei einem kritischen Sturz ist eine Beschädigung des Akkumulators 1 und dessen Komponenten nicht ausgeschlossen.

Die Steuerungselektronik 9 sendet daraufhin ein entsprechendes Signal an die Steuerungseinrichtung 5.

Die Steuerungseinrichtung 5 veranlasst daraufhin das kontrollierte Entladen der Energiespeicherzellen 3 mit Hilfe der Entladeeinrichtung 4.

Darüber hinaus ist es auch möglich, dass die Steuerungseinrichtung 5 durch Aussenden eines Signals veranlasst, dass ein erneutes Laden der Energiespeicherzellen 3 mit elektrischer Energie blockiert wird, wenn der Akkumulator 1 mit einer Ladevorrichtung verbunden ist.

Die Ladevorrichtung ist in den Figuren nicht gezeigt.

### Bezugszeichen:

- 1: Akkumulator
- 2: Gehäuse des Akkumulators
- 3: Energiespeicherzellen
- 4: Entladeeinrichtung
- 5: Steuerungseinrichtung
- 6: Vorrichtung zum Erfassen eines kritischen Sturzes eines Akkumulators
- 7: Rahmen
- 7a: Oberseite des Rahmens
- 7b: Unterseite des Rahmens
- 7c: Vorderseite des Rahmens
- 7d: Rückerseite des Rahmens
- 7e: linke Seitenwand des Rahmens
- 7f: rechte Seitenwand des Rahmens
- 8: Sensor
- 9: Steuerungselektronik
- 10: Befestigungselement
- 10a: erstes Ende des Befestigungselements
- 10b: zweites Ende des Befestigungselements
- 11: Trägereinrichtung
- 11a: Gewichtselement
- 11b: Kupplungselement

- DP: Drehpunkt
- V: Innenvolumen des Rahmens
- W: Innenvolumen der Trägereinrichtung

## Patentansprüche

1. Vorrichtung (6) zum Erfassen eines kritischen Sturzes eines Akkumulators (1),
**gekennzeichnet durch** wenigstens einen Sensor (8) zum Erfassen eines Beschleunigungswerts in einer vorbestimmten Richtung (x, y, z), eine Steuerungselektronik (9), welche ausgestaltet ist mindestens eine Funktion des Akkumulators (1) zu steuern sowie ein Befestigungselement (10) für den wenigstens einen Sensor (8), wodurch der wenigstens eine Sensor (8) um einen Drehpunkt (DP) relativ zum Akkumulator (1) schwenkbar gelagert ist und im Wesentlichen in einer vorbestimmten Raumlage zum Akkumulator (1) gehalten wird, wenn der Akkumulator (1) um wenigstens eine Drehachse (x, y, z) rotiert.

2. Vorrichtung (6) nach Anspruch 1,
**dadurch gekennzeichnet, dass** die Steuerungselektronik (9) ausgestaltet ist beim Erfassen eines vorbestimmten Beschleunigungsschwellwerts durch den wenigstens einen Sensor (8) wenigstens ein Signal an die Steuerungselektronik (9) zu senden.

3. Akkumulator (1) mit einer Vorrichtung (6) zum Erfassen eines kritischen Sturzes, wobei der Akkumulator (1) eine Steuerungseinrichtung (5) mit einer Entladeeinrichtung (4) sowie wenigstens eine Energiespeichereinrichtung (3) enthält,
**dadurch gekennzeichnet, dass** die Vorrichtung (6) zum Erfassen eines kritischen Sturzes wenigstens einen Sensor (8) zum Erfassen eines Beschleunigungswerts in einer vorbestimmten Richtung, eine Steuerungselektronik (9), welche ausgestaltet ist mindestens eine Funktion des Akkumulators (1) zu steuern sowie ein Befestigungselement (10) für den wenigstens einen Sensor (8) enthält, wobei das Befestigungselement (10) so ausgestaltet ist, dass der wenigstens eine Sensor (8) um einen Drehpunkt (DP) relativ zum Akkumulator (1) schwenkbar gelagert ist und im Wesentlichen in einer vorbestimmten Raumlage zum Akkumulator (1) gehalten wird, wenn der Akkumulator (1) um wenigstens eine Drehachse (x, y, z) rotiert.

4. Akkumulator (1) nach Anspruch 4,
**dadurch gekennzeichnet, dass** die wenigstens eine Energiespeichereinrichtung (3) durch die Entladeeinrichtung (4) wenigstens teilweise entladen wird, wenn ein vorbestimmter Beschleunigungsschwellwert durch den wenigstens einen Sensor (8) erfasst wird.

5. Akkumulator (1) nach Anspruch 4 oder 5,
**dadurch gekennzeichnet, dass** die Steuerungselektronik (9) und/oder Steuerungseinrichtung (5) ausgestaltet ist, dass ein Laden der wenigstens einen Energiespeichereinrichtung (3) mit elektrischer Energie verhindert wird, wenn ein vorbestimmter Beschleunigungsschwellwert durch den wenigstens einen Sensor (8) erfasst wird.
